# EUROPÄISCHE PATENTANMELDUNG

(11) **EP 0 736 712 A1**
(43) Veröffentlichungstag der Anmeldung: **09.10.1996**
(21) Anmeldenummer: 96104941.8
(22) Anmeldetag: 28.03.1996
(51) Int. Cl.: F16K 1/42, F16K 1/46

(54) **Pneumatikventil**

(30) Priorität: 05.04.1995 DE 19512722
(71) Anmelder: CGS Analysen-, Mess- und Regeltechnik GmbH, 85095 Denkendorf (DE)
(72) Erfinder: Geyer, Alfons, 85095 Denkendorf (DE); André, Helmut, 85101 Lenting (DE); Mehringer, Michael, 85125 Kinding (DE)
(74) Vertreter: Neubauer, Hans-Jürgen, Dipl.-Phys.

(57) **Zusammenfassung**

Die Erfindung betrifft ein Pneumatikventil. Erfindungsgemäß ist der Ventilsitz als elastischer Ventilsitzring 17 ausgebildet, der sich in der Bohrung des Gaseingangs 11 über eine Schulter 18 zur Gaswegkammer 15 hin abstützt und dabei mit einer gerundeten Ventilsitzfläche 19 in den Bereich der Bohrung ragt. Das freie Ende des Ventilstößels 23 ist ballig ausgeführt mit einem abgerundeten Dichtrand, der an der Ventilsitzfläche dicht zur Anlage bringbar ist. Zudem steht der Ventilsitzring 17 an der Außenseite des Ventilbodenteils 3 vor, wodurch er in einer zusätzlichen Funktion bei der Montage an einer Grundplatte 8 als Dichtring wirkt. Einer der wesentlichen Vorteile besteht in der verbesserten Dichtheit bei geringem Kraftaufwand und in der leichten Auswechselbarkeit des Ventilsitzrings 17 ohne das Ventil zerlegen zu müssen.

## Beschreibung

Die Erfindung betrifft ein Pneumatikventil nach dem Oberbegriff des Anspruchs 1.

Ein bekanntes Pneumatikventil enthält in einem Ventilblock aufeinanderfolgende gegeneinander dichte Ventilkammern. Dabei ist eine erste Ventilkammer als schaltbare Gaswegkammer durch einen Ventilboden des Ventilblocks und eine bewegliche Ventilmembran gebildet. Der Ventilboden weist einen Gaseingang als Bohrung sowie wenigstens einen Gasausgang auf.

Eine zweite Ventilkammer ist als Steuerkammer durch eine Ventilmembran und einen Ventildeckel des Ventilblocks gebildet. Am Ventildeckel ist ein Steuerlufteingang vorgesehen.

Mit der Ventilmembran bzw. mit den Ventilmembranen ist ein mit einer Ventilfeder vorgespannter Ventilstößel bewegungsübertragend verbunden.

Der Gaseingang an der Gaswegkammerinnenseite ist als Ventilsitz und der Ventilstößel an einem dem Ventilsitz zugeordneten freien Ende als Ventilanlagefläche ausgebildet, so daß bei einer Druckbeaufschlagung der Ventilmembran mit Steuerluft unter Überwindung der Federkraft der Ventilfeder die Ventilanlagefläche für eine Absperrung des Gaseingangs dicht am Ventilsitz zur Anlage kommt.

Weiter ist eine Befestigungsvorrichtung vorgesehen, mit der der Ventilboden mit seiner Außenseite wenigstens im Bereich des Gaseingangs über einen dazwischenliegenden Dichtring mit einer Anlagefläche einer Gaszuleitung dicht verbindbar ist.

Der Aufbau des Ventilblooks ist hier zylindrisch, wobei der Ventilstößel, der Gaseingang und der Steuerlufteingang in der Zylinderachse liegen.

Der Ventilblock des bekannten Pneumatikventils ist zudem dreiteilig aufgebaut, wobei zwischen der Gaswegkammer und der Steuerkammer eine dritte Kammer als Ventilfederkammer angeordnet ist. Dazu ist eine erste Ventilmembran zwischen einem Ventilbodenteil und einem rohrförmigen Mittelteil eingespannt, wobei das Mittelteil die Ventilfederkammer am Umfang begrenzt. Eine zweite Ventilmembran ist zwischen dem Mittelteil und einem Ventildeckelteil dicht eingespannt.

In der Ventilkammer ist einstückig mit dem rohrförmigen Mittelteil eine zentrale Führungshülse für den Schaft des Ventilstößels geformt, die über eine Querwand Verbindung mit dem rohrförmigen Teil hat. Als Ventilfeder ist eine Spiraldruckfeder verwendet, die die Führungshülse umfaßt und sich an der Querwand in Richtung zum Ventildeckel hin abstützt. Der Ventilstößel trägt an seinem zum Ventildeckel hinweisenden Ende eine Platte an der einerseits die zweite Ventilmembran von oben her flächig anliegt und andererseits das andere Ende der Spiraldruckfeder von unten her abgestützt ist. Im rohrförmigen Mittelteil ist zur Außenseite hin eine Entlüftungsöffnung angebracht. Der Ventilbodenteil, der Mittelteil und der Ventildeckelteil sind über durchgehende Schrauben miteinander verbunden. Als Membranmaterial ist Polytetrafluoräthylen (PTFE) verwendet.

Der Gaseingang weist einen erhabenen Ring innerhalb der Gaswegkammer auf, dessen Oberfläche als Ventilsitz die Dichtfläche bildet. An dem dieser Dichtfläche gegenüberliegenden Ende des Ventilstößels ist eine Platte angebracht, an der die erste Ventilmembran durchgehend anliegt. Diese Ventilmembran ist mit Hilfe eines Rings, der den Gaseingang umfaßt, mit dieser Platte fest und bewegungsübertragend verbunden. Bei einer Beaufschlagung der Steuerkammer mit Steuerluft wird der Ventilstößel auf die Dichtfläche des Gaseingangs bewegt und der zentrale Bereich der ersten Membran wird dort zur Absperrung des Gaswegs zur Anlage gebracht. Es wird somit hier eine Dichtung durch eine glatte Ventilmembran aus Polytetrafluoräthylen auf einer glatten Metallfläche erzeugt. Dadurch ergeben sich mehrere Nachteile:

Rauhigkeiten, z. B. Kratzer oder Verunreinigungen, führen zu Undichtigkeiten. Zudem können sich durch die zwei plan aneinanderliegenden Dichtflächen Partikel leicht einklemmen und haften bleiben. Die verwendete Dichtfolie ist nur wenig elastisch, so daß Verunreinigungen und Rauhigkeiten der Dichtflächen nur wenig ausgeglichen werden können und zu Undichtigkeiten führen. Die Selbstreinigung der Dichtflächen ist wegen der planen Anlage nur gering. Insgesamt ist eine hohe Kraft notwendig, um die Membran dicht auf die plane Metalldichtfläche zu pressen. Zudem können eine unsymmetrische Federkraft der Druckspiralfeder und Fertigungstoleranzen zum Verkanten des Ventilstößels führen, so daß dann keine plane, genaue Anlage der Dichtflächen erfolgt, was wiederum zu Undichtigkeiten führt oder für eine gute Dichtung durch eine Erhöhung des Steuerluftdrucks ausgeglichen werden muß. Dies führt jedoch zu einem Verschleiß und zu einer kürzeren Lebensdauer der Bauteile.

Die Justierung der Federkraft der Spiraldruckfeder ist langwierig und schwierig, da das Ventil sowohl bei Überdruck als auch Unterdruck im Gasweg zuverlässig arbeiten soll: wird bei geöffnetem Ventil im Gasweg ein Unterdruck, z. B. 200 mbar abs., erzeugt, so kann sich das Ventil unerwünscht zuziehen. Wenn bei geschlossenem Ventil im Gasweg ein Unterdruck, z. B. 200 mbar abs., erzeugt wird, so besteht die Gefahr, daß das Ventil nicht oder nur langsam oder nicht ganz öffnet.

Die Ursache dafür ist die relativ geringe Federkraft, die etwa gleich groß wie der Unterdruck auf die Dichtmembran ist. Zur Behebung dieses Nachteils kann die Federkraft aber nicht einfach verstärkt werden, weil sonst bei Überdruck im Gasweg und bei den üblichen Steuerluftdrucken das Ventil wegen der vorstehend genannten Nachteile der Dichtung durch eine glatte Membranfläche auf einer glatten Metallfläche nicht mehr dicht wird.

Für eine dichte Weiterführung des Gaseingangs und Gasausgangs der Gaswegkammer zu einer an den Ventilboden anschließenden Anlagefläche sind Dichtringe vorgesehen. Der Dichtring am Gaseingang ist hierbei unabhängig vom Ventilsitz angebracht.

Aufgabe der Erfindung ist es demgegenüber ein gattungsgemäßes Pneumatikventil so weiterzubilden, daß bei einfachem Aufbau die Dichtung verbessert wird.

Diese Aufgabe wird mit den kennzeichnenden Merkmalen des Anspruchs 1 gelöst.

Gemäß Anspruch 1 ist der Ventilsitz als elastischer Ventilsitzring in der Art eines O-Rings ausgebildet, der in der Bohrung des Gaseingangs über eine Schulter zur Gaswegkammer hin abgestützt ist. Der innere Durchmesser des Ventilsitzrings ist zumindest im eingebauten Zustand des Ventils kleiner als der lichte Durchmesser der Bohrung, wodurch der Ventilsitzring als elastischer Ventilsitz in den Bereich der Bohrung ragt. Das freie Ende des Ventilstößels ist ballig ausgeführt mit einer Ventilanlagefläche, die an die schräg nach innen gerichteten Ringflächen des elastischen Ventilsitzes angepaßt und dort dicht zur Anlage bringbar ist. Der Ventilsitzring steht zudem teilweise an der Außenseite des Ventilsbodens im nicht an der Anlagefläche montierten Zustand umlaufend vor. Bei einer Befestigung an der Anlagefläche der Gaszuleitung ist der Ventilsitzring somit in der zusätzlichen Funktion als Dichtring einklemmbar, wobei seine Abstützung zur Gaswegkammer hin an der vorgenannten Schulter erfolgt.

Die Ventilfeder kann hier in einer der Ventilkammern beispielsweise als Druckfeder in der Gaswegkammer oder Zugfeder in der Steuerkammer angeordnet sein.

Erfindungsgemäß dichtet die Rundung des ballig ausgebildeten Ventilstößelendes auf der gerundeten Fläche des Ventilsitzrings ab, wobei dieser als elastischer O-Ring ausgebildet ist. Es ist daher keine große Kraft notwendig, da durch das Aufeinandertreffen zweier Rundungen die gegenseitige Dichtfläche am Beginn des Schließens sehr klein ist. Durch diese kleine Dichtfläche ergibt sich eine große Kraft pro Flächeneinheit. Die Dichtfläche vergrößert sich immer mehr, bis das Ventilstößelende elastisch und dichtend am Ventilsitzring aufsitzt. Eine unsymmetrische Federkraft von der Ventilfeder und/oder Fertigungstoleranzen werden durch die Elastizität des Ventilsitzrings einfach ausgeglichen, so daß dabei kein erhöhter Kraftbedarf für ein dichtes Schließen notwendig wird.

Ebenso werden Rauhigkeiten oder Verunreinigungen an den Dichtflächen durch die Elastizität des Ventilsitzrings ausgeglichen, so daß auch dann das Ventil dicht schließt. Zudem bleiben an den runden aneinanderliegenden Dichtflächen Partikel ohnehin nicht so leicht haften. Sollte dies dennoch vorkommen, liegt eine große Selbstreinigungswirkung durch die Walkarbeit des elastischen Ventilsitzrings beim Schließen vor. Im Gegensatz zum Stand der Technik werden somit Partikel und Verunreinigungen nicht an den dortigen planen Dichtflächen dauerhaft angepreßt.

Ein weiterer Vorteil besteht darin, daß das Ventil im geöffneten Zustand durch einen Unterdruck im Gasweg, z. B. bei 200 mbar abs. nicht zugezogen wird. Das geschlossene Ventil öffnet zudem sicher auch bei einem Unterdruck im Gasweg, z. B. bei 200 mbar abs. Dies ist möglich, weil gegenüber dem Ventil nach dem Stand der Technik eine stärkere Ventilfeder verwendet werden kann, da das Dichtverhalten des Ventils im Druckbereich besser ist.

Der Ventilsitzring hat zwei Funktionen, in dem er einerseits als elastischer Ventilsitz für den Ventilstößel dient, und andererseits an der Anlagefläche der Gaszuleitung, z. B. einer Grundplatte, abdichtet (Flanschventil). Für beide Funktionen wird somit nur ein Bauteil erforderlich. Zudem kann der Ventilsitzring nach Abnahme des nicht zerlegten Ventilblocks von der Anlagefläche ausgewechselt werden. Wenn beim Ventil nach dem Stand der Technik Probleme an den Dichtflächen auftreten, muß dagegen das Ventil ganz zerlegt werden, was zusätzlich zum Arbeitsaufwand die Gefahr weiterer Undichtigkeiten an der Ventilmembrane an den Einspannstellen beinhaltet.

Für günstige geometrische Dichtverhältnisse wird mit Anspruch 2 vorgeschlagen, daß der Ventilsitzring mit etwa der Hälfte seines Wulstdurchmessers an der Schulter anliegt und mit der Hälfte in den Bereich der Bohrung ragt.

Bevorzugt wird auch hier nach Anspruch 3 ein an sich bekannter zylindrischer Aufbau verwendet, wobei der Ventilstößel und der Ventilsitzring in der Zylinderachse liegen. Nach Anspruch 4 soll der Gasausgang in Form einer oder mehrerer Bohrungen in einem Bereich versetzt zur Zylinderachse liegen, wobei dieser Bereich durch einen weiteren Dichtring als O-Ring begrenzt und zur Anlagefläche hin abgedichtet ist. Es versteht sich, daß je nach den Gegebenheiten Gaseingang und Gasausgang vertauschbar sind.

Das erfindungsgemäße Pneumatikventil ist bevorzugt für den Einsatz in Abgasanalysenanlagen im Fahrzeugbereich zur Schaltung unterschiedlicher Meßgaswege vorgesehen. Als O-Ringmaterial mit der erfordelichen Elastizität und Resistenz gegen die Abgase ist Fluorelastomer (FKM; FPM; Viton) oder Silikonkautschuk gemäß Anspruch 5 geeignet. Als Membranmaterial ist in an sich bekannter Weise Polytetrafluoräthylen (PTFE; Teflon) zu verwenden.

Die Ansprüche 8, 9 und 10 betreffen an sich bekannte Merkmale, insbesondere eine Dreikammerausbildung, die für eine gute Funktion und einem einfachen Aufbau auch vorteilhaft in Verbindung mit den anderen Merkmalen des erfindungsgemäßen Ventils verwendbar sind.

Mit den Merkmalen des Anspruchs 11 kann die erste Membran auf einfache Weise mit dem Ventilstößel bewegungsübertragend verbunden werden, wobei nach Anspruch 12 zusätzlich eine elastische plattenförmige Membranabstützung zweckmäßig ist.

Um auszuschließen, daß sich durch mögliche Undichtigkeiten in der Ventilfederkammer funktionsstörende Über- oder Unterdrucke aufbauen können, ist diese gemäß Anspruch 13 zur Ventilaußenseite hin über eine an sich bekannte Öffnung entlüftet.

Als gut vormontierbare Einheit ist nach Anspruch 14 der Ventilblock aus Ventilbodenteil, Mittelteil und Ventildeckelteil mit den darin befindlichen Innenteilen über vom Ventilbodenteil zum Ventildeckelteil durchgehende Verschraubungen miteinander verbunden. Zudem sind dann weitere durchgehende Verschraubungen für eine Befestigung an der Anlagefläche bzw. Grundplatte vorgesehen.

Anhand einer Zeichnung wird ein Ausführungsbeispiel der Erfindung mit weiteren Einzelheiten, Merkmalen und Vorteilen näher erläutert.

Es zeigen:
- Fig. 1: einen Längsschnitt durch ein montiertes Pneumatikventil bei offenem Gaswegdurchgang, und
- Fig. 2: das Pneumatikventil nach Fig. 1 bei geschlossenem Gasweg und
- Fig. 3: einen Längsschnitt durch ein montiertes Pneumatikventil einer zweiten Ausführungsform bei geschlossenem Gasweg.

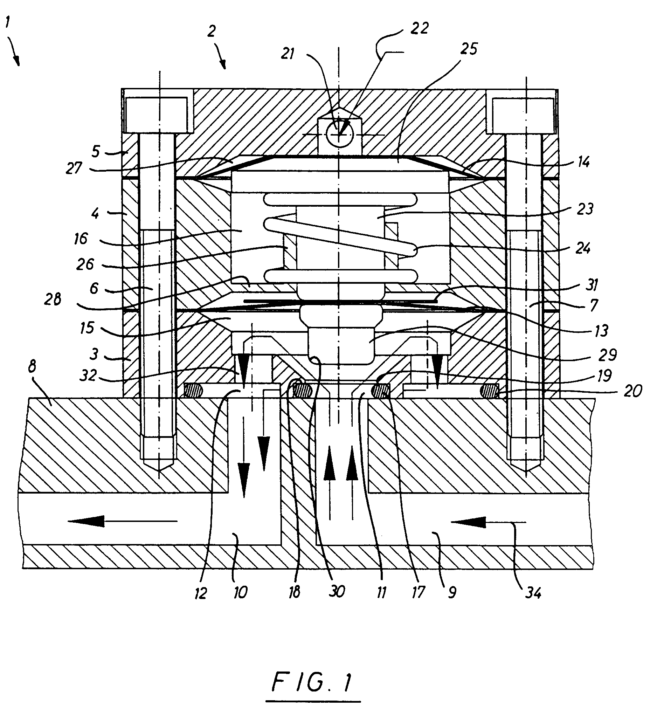

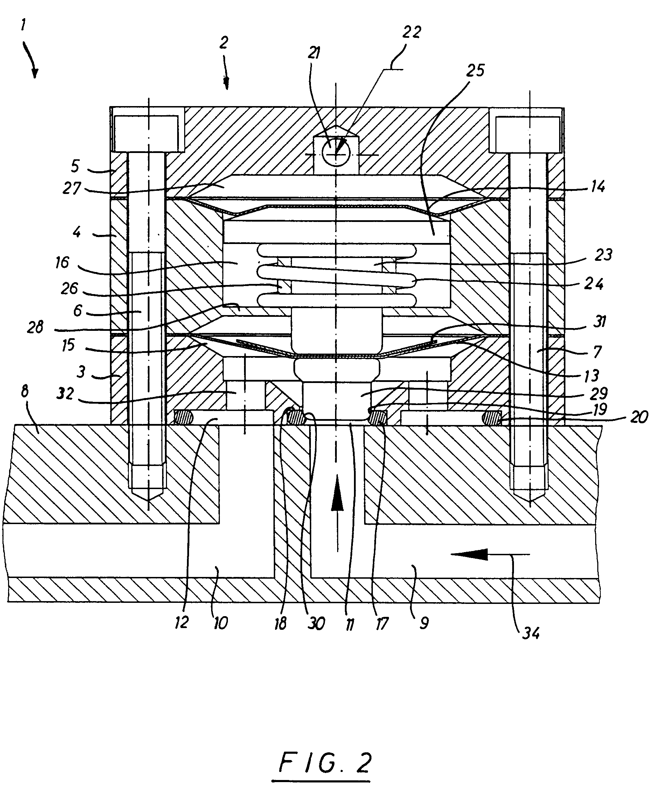

In den Fig. 1 und 2 ist ein Pneumatikventil 1 dargestellt mit einem Ventilblock 2, der dreiteilig aus einem Ventilbodenteil 3, einem rohrförmigen Mittelteil 4 und einem Ventildeckelteil 5 aufgebaut ist. Das Pneumatikventil 1 ist insgesamt zylindrisch und als Flanschventil mit am Umfang versetzten Schrauben 6, 7 mit dem Ventilbodenteil 3 an eine Grundplatte 8 geschraubt. In dieser Grundplatte 8 sind ein Gaseingangskanal 9 und ein Gasausgangskanal 10 enthalten, die an einen Gaseingang 11 bzw. Gasausgang 12 des Pneumatikventils 1 am Ventilbodenteil 3 anschließen.

Bei der Verwendung in der Automobilabgastechnik ist die Grundplatte 8 als Gasverteilerblock ausgebildet mit einer Mehrzahl von Gaseingangskanälen 9 und Gasausgangskanälen 10, denen jeweils ein Pneumatikventil zugeordnet ist, wobei diese in größerer Anzahl eng nebeneinander liegen. Ersichtlich kommt es dabei auf eine kompakte Bauweise bei guter Funktion und guter Dichtheit an, wobei relativ hohe Temperaturen bis ca. 200°C zu berücksichtigen sind.

Zwischen dem Ventilbodenteil 3 und dem Mittelteil 4 ist eine erste querverlaufendene Ventilmembran 13 aus Polytetrafluoräthylen dicht eingespannt. Eine entsprechende zweite Ventilmembran 14 ist zwischen dem Mittelteil 4 und dem Ventildeckelteil 5 ebenfalls dicht eingespannt. Durch diese Anordnungen werden drei Ventilkammern als Gaswegkammer 15, Ventilfederkammer 16 und Steuerkammer 27 gebildet.

Der Gaseingang 11 liegt als kreisrunde Bohrung zentral. Der Gasausgang 12 ist als den Gaseingang 11 umgebende Ringkammer ausgebildet, die über gegeneinander versetzte Bohrungen 32 Verbindung mit der Gaswegkammer 15 hat.

Am Gaseingang 11 ist als elastischer Ventilsitzring ein erster O-Ring 17 angebracht, der sich über eine Schulter 18 zur Gaswegkammer 15 hin abgestützt und gegen die Oberfläche der Grundplatte 8 dicht eingeklemmt ist. Der O-Ring 17 ist dabei etwa mit der Hälfte seines Wulstdurchmessers eingeklemmt und steht mit der anderen Hälfte zur Mitte der Bohrung des Gaseingangs 11 vor, wodurch eine gerundete, elastische Ventilsitzfläche 19 gebildet ist. Als chemisch weitgehend resistentes und für höhere Temperaturen geeignetes Material für den O-Ring 17 ist Fluorelastomer verwendet. Gegebenenfalls könnte auch Silikonkautschuk verwendet werden.

Ein entsprechender, größerer, zweiter O-Ring 20 ist an der Außenseite der Ringkammer des Gasausgangs 12 angebracht und dicht gegen die Oberfläche der Grundplatte 8 eingklemmt. Mit dieser Anordnung der beiden O-Ringe 17 und 20 ist ein dichter Anschluß des Ventilsblocks 2 an die Grundplatte 8 bezüglich der Gaswege hergestellt.

Im Material des Ventildeckelteils 5 ist von der Seite her eine Bohrung als Steuerlufteingang 21 angebracht, über die Steuerluft (Pfeil 22) zuführbar ist. Je nach den geometrischen Gegebenheiten kann der Steuerlufteingang auch oben an Ventildeckelteil 5 angebrach sein. Im Ventilblock 2 ist zentral ein bewegbarer Ventilstößel 23 angebracht, der über eine Ventilfeder 24 in der Form einer Druckspiralfeder nach oben in seine Offenstellung gedrängt wird. Das obere Ende des Ventilstößels 23 ist als Platte 25 ausgeführt, an der von oben her die zweite Ventilmembran 14 anliegt und sich von unten her die Ventilfeder 24 abstützt, wobei in der Offenstellung diese Platte an der Unterfläche des Ventildeckelteils 5 über die zweite Membran 14 anliegt.

Die Ventilfederkammer 16 weist eine zentrale Führungshülse 26 auf, die über eine Querwand 28 mit der Außenwand des Mittelteils 4 in derem unteren Bereich verbunden ist.

Der Schaft des Ventilstößels 23 ist zweiteilig ausgeführt, wobei der obere Teil in der Führungshülse 26 gehalten und geführt ist und der untere Teil als Dichtstößel 29 ausgebildet ist. Die beiden Schaftteile sind miteinander verschraubt, wobei an der Trennstelle die erste Ventilmembran dicht und bewegungsübertragend eingespannt ist. Das untere freie Ende des Ventilstößels 23 bzw. des Dichtstößels 29 ist ballig mit einem gerundeten Dichtrand 30 so ausgebildet, daß dieser an der gerundeten Ventilsitzfläche 19 des ersten O-Rings 17 zur Anlage gebracht werden kann.

Oberhalb der ersten Ventilmembran 13 ist zudem eine elastische, runde Platte 31 mit am Ventilstößel 23 als Membranabstützung eingespannt.

Die Funktion wird anhand der unterschiedlichen Ventilstößelstellungen in den Fig. 1 und 2 erläutert:

In Fig. 1 ist das Pneumatikventil in seiner Offenstellung gezeigt. Dabei ist die Steuerkammer 27 und damit die zweite Membran 14 nicht mit Steuerluft unter Druck beaufschlagt. Der Ventilstößel 23 ist durch die Ventilfeder 24 in seine obere Stellung gedrängt und der Dichtstößel 29 vom Ventilsitz des ersten O-Rings 17 abgehoben. Dadurch ist der Gasweg durch die Gaswegkammer 15 vom Gaseingang 11 zum Gasausgang 12 freigegeben, wie dies durch die Gaswegpfeile 34 dargestellt ist.

In Fig. 2 ist die Steuerkammer 27 mit Steuerluft unter Druck beaufschlagt, wodurch über die zweite Membran 14 der Ventilstößel 23 nach unten gegen die Kraft der Ventilfeder 24 gegen den O-Ring 17 gepreßt wird. Dabei liegt das ballige Dichtstößelende mit dem Dichtrand 30 an der elastischen, gerundeten Ventilsitzfläche 19 des O-Rings 17 dicht an. Das Pneumatikventil ist somit in seiner Geschlossenstellung und der Gasweg abgesperrt. Zur erneuten Freigabe des Gaswegs wird die Steuerkammer über den Steuerlufteingang 21 wieder entlüftet, wodurch die Ventilfeder 24 den Ventilstößel 23 wieder in seine Offenstellung gemäß Fig. 1 anhebt.

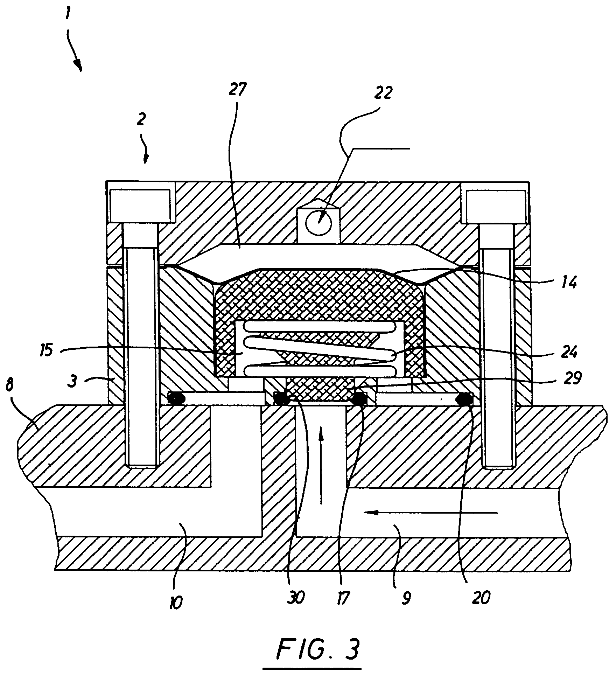

In Fig. 3 ist eine zweite Ausführungsform eines Pneumatikventils 1 dargestellt. Der Aufbau entspricht im wesentlichen der ersten Ausführungsform gemäß den Fig. 1 und 2, so daß auch in Fig. 3 die entsprechenden Bezugszeichen verwendet sind.

Der Unterschied besteht darin, daß keine separate, durch eine Membran abgetrennte Ventilfederkammer vorgesehen ist, sondern die Ventilfeder 24 in der Gaswegkammer 15 angeordnet ist. Entsprechend ist somit nur eine Ventilmembran 14 in einem zweiteiligen Aufbau verwendet.

Der Dichtstößel 29 ist hier nur am Ventilunterteil geführt und aus Kunststoff (PPS) gefertigt. Dieser Kunststoff hat die Eigenschaft, daß sich die Berührungsflächen durch häufiges Schalten polieren. Bei einem Dichtstößel aus Metall besteht die Gefahr, daß sich ein Abrieb in Form von Metallspänen ergibt, welcher den Dichtstößel im Ventilunterteil verklemmen lassen. Dieses Ventil besteht nur aus wenigen Einzelteilen, das sich auch von wenig qualifizierten Personen einfach zerlegen und reinigen läßt. Es kann praktisch nicht unrichtig zusammengebaut werden. Der O-Ring 17 ist somit auch hier einfach auswechselbar, ohne daß das Ventil zerlegt werden muß. Dies ist ein wichtiger Vorteil, wenn solche Ventile in beheizbaren Kammern bei hohen Temperaturen bis 200°C betrieben werden, da Meßanlagen zum Wechseln der O-Ringe nicht abgeschaltet werden müssen.

## Patentansprüche

1. Pneumatikventil
mit einem Ventilblock (2) mit aufeinanderfolgenden gegeneinander dichten Ventilkammern, wobei
eine erste Ventilkammer als schaltbare Gaswegkammer (15) durch einen Ventilboden des Ventilblocks (2) und eine bewegliche Ventilmembran (13) gebildet ist, und durch den Ventilboden einen Gaseingang (11) als Bohrung sowie wenigstens einen Gasausgang (12) aufweist,
eine zweite Ventilkammer als Steuerkammer (27) durch eine Ventilmembran (14) und einen Ventildeckel des Ventilblocks (2) gebildet ist, und am Ventildeckel ein Steuerlufteingang (21) vorgesehen ist,
mit der Ventilmembran (13) ein mit einer Ventilfeder (24) vorgespannter Ventilstößel (23) bewegungsübertragend verbunden ist,
der Gaseingang (11) an der Gaswegkammerinnenseite als Ventilsitz ausgebildet ist und der Ventilstößel (23) an einem dem Ventilsitz zugeordneten freien Ende als Ventilanlagefläche ausgebildet ist, so daß bei einer Druckbeaufschlagung der Ventilmembran (14) mit Steuerluft unter Überwindung der Federkraft der Ventilfeder (24) die Ventilanlagefläche für eine Absperrung des Gaseingangs (11) dicht am Ventilsitz zur Anlage kommt,
mit einer Befestigungsvorrichtung (6, 7) mit der der Ventilboden mit seiner Außenseite wenigstens im Bereich des Gaseingangs (11) über einen dazwischenliegenden Dichtring mit einer Anlagefläche einer Gaszuleitung dicht verbindbar ist,
dadurch gekennzeichnet,
daß der Ventilsitz als elastischer Ventilsitzring (17) in der Art eines O-Rings ausgebildet ist, der in der Bohrung des Gaseingangs (11) über eine Schulter (18) zur Gaswegkammer hin abgestützt ist, wobei der innere Durchmesser des Ventilsitzrings (17) zumindest im eingebauten Zustand des Ventils kleiner ist als der lichte Durchmesser der Bohrung und damit der Ventilsitzring (17) als elastischer Ventilsitz in den Bereich der Bohrung ragt,
daß das freie Ende des Ventilstößels (23) ballig ausgeführt ist mit einer Ventilanlagefläche (30), die an die schräg nach innen gerichteten Ringflächen (19) des elastischen Ventilsitzringes (17) angepaßt und dort dicht zur Anlage bringbar ist,
daß der Ventilsitzring (17) teilweise an der Außenseite des Ventilbodens (3) umlaufend im nicht an der Anlagefläche montierten Zustand vorsteht und dadurch bei der Befestigung an der Anlagefläche der Gaszuleitung in der zusätzlichen Funktion als Dichtring einklemmbar ist, wobei eine Abstützung an der Schulter (18) erfolgt.

2. Pneumatikventil nach Anspruch 1, dadurch gekennzeichnet, daß der Ventilsitzring (17) mit etwa der Hälfte seines Wulstdurchmessers an der Schulter (18) anliegt und mit der anderen Hälfte in den Bereich der Bohrung (11) ragt.

3. Pneumatikventil nach Anspruch 1 oder Anspruch 2, dadurch gekennzeichnet, daß der Aufbau zylindrisch ist, wobei der Ventilstößel (23) und der Ventilsitzring (17) in der Zylinderachse liegen.

4. Pneumatikventil nach Anspruch 3, dadurch gekennzeichnet, daß der Gasausgang (12) als eine oder mehrere als Bohrungen in einem Bereich versetzt zur Zylinderachse liegt und dieser Bereich bevorzugt koaxial zum Ventilsitzring (17) mit einem Dichtring als O-Ring (20) begrenzt ist, der entsprechend dem Ventilsitzring (17) zumindest teilweise im nicht an der Anlagefläche montierten Zustand an der Außenseite des Ventilbodens (3) umlaufend vorsteht und bei der Montage an der Anlagefläche eingeklemmt wird und abdichtet.

5. Pneumatikventil nach einem der Ansprüche 1 bis 4, dadurch gekennzeichnet, daß als O-Ringmaterial Fluorelastomer (FKM; FPM; Viton) oder Silikonkautschuk und/oder als Membranmaterial Polytetrafluoräthylen (PTFE; Teflon) verwendet sind.

6. Pneumatikventil nach einem der Ansprüche 1 bis 5, dadurch gekennzeichnet, daß die Befestigungsvorrichtung aus wenigstens einer bevorzugt mehreren am Umfang des Ventilblocks versetzt angebrachten Verschraubungen (6, 7) besteht, die vom Ventildeckel (5) zur Anlagefläche (8) durchgehen.

7. Pneumatikventil nach einem der Ansprüche 1 bis 6, dadurch gekennzeichnet, daß der Steuerlufteingang (21) von der Seite des Ventilblocks (2) oder von oben durch den Ventildeckel (5) angebracht ist.

8. Pneumatikventil nach einem der Ansprüche 1 bis 7, dadurch gekennzeichnet, daß zwischen der Gaswegkammer (15) und der Steuerkammer (27) anschließend an die erste Ventilmembran eine dritte Kammer als Ventilfederkammer (16) angeordnet ist, die zur Steuerkammer (27) über eine zweite Ventilmembran (14) abgedichtet ist.

9. Pneumatikventil nach Anspruch 8, dadurch gekennzeichnet, daß der Ventilblock (2) dreiteilig aufgebaut ist, wobei die erste Ventilmembran (13) zwischen einem Ventilbodenteil (3) und einem rohrförmigen Mittelteil (4), das die Ventilfederkammer (16) begrenzt, und die zweite Ventilmembran (14) zwischen dem Mittelteil (4) und einem Ventildeckelteil (5) dicht eingespannt sind.

10. Pneumatikventil nach Anspruch 8, dadurch gekennzeichnet,
daß die Ventilfederkammer (16) eine zentrale Führungshülse (26) für den Schaft des Ventilstößels (23) aufweist,
daß die Führungshülse (26) über eine Querwand (28) mit dem Mittelteil (4) verbunden ist,
daß als Ventilfeder (24) eine Spiraldruckfeder verwendet ist, die die Führungshülse (26) umfaßt und sich mit einer Seite an der Querwand (28) mit Druckrichtung zum Ventildeckel (5) hin abstützt,
daß der Ventilstößel (23) an seinem zum Ventildeckel (5) weisenden Ende mit einer Platte (25), bevorzugt in einer pilzförmigen Ausbildung versehen ist, an der einerseits die zweite Ventilmembran (14) flächig anliegt und andererseits das andere Ende der Spiraldruckfeder (24) abgestützt ist.

11. Pneumatikventil nach einem der Ansprüche 8 bis 10, dadurch gekennzeichnet, daß der Schaft des Ventilstößels (23) im Bereich der Gaswegkammer trennbar ist und an dieser Trennstelle die erste Ventilmembran (13) in einem mittleren Bereich bewegungsübertragend eingespannt ist.

12. Pneumatikventil nach Anspruch 11, dadurch gekennzeichnet, daß zugleich an der Trennstelle im Bereich der Ventilfederkammer (16) eine frei bewegliche elastische Platte (31) als Membranabstützung eingespannt ist.

13. Pneumatikventil nach einem der Ansprüche 9 bis 12, dadurch gekennzeichnet, daß im rohrförmigen Mittelteil (4) zur Ventilaußenseite hin eine an sich bekannte Entlüftungsöffnung angebracht ist.

14. Pneumatikventil nach einem der Ansprüche 9 bis 13, dadurch gekennzeichnet, daß der Ventilbodenteil (3), der Mittelteil (4) und der Ventildeckelteil (5) über vom Ventilbodenteil (3) zum Ventildeckelteil (5) durchgehende Verschraubungen (6, 7) miteinander verbunden sind.
